# FASCICULE DE BREVET EUROPEEN

(11) **EP 0 684 124 B1**
(45) Date de publication et mention de la délivrance du brevet: **25.11.1998**
(21) Numéro de dépôt: 95830115.2
(22) Date de dépôt: 28.03.1995
(51) Int. Cl.: B29C 57/08

(54) **Machine pour façonner en forme de verre des extrémités de tubes modelés thermiquement**
Muffenherstellungsmaschine für thermisch erweichte Rohre
Pipe belling machine for thermally softened pipes

(30) Priorité: 02.05.1994 IT BO940189
(43) Date de publication de la demande: 29.11.1995
(73) Titulaire: S.I.C.A. SERRANDE INFISSI CARPENTERIA ATTREZZATURA S.p.A., I-48011 Alfonsine (Ravenna) (IT)
(72) Inventeur: Savioli, Leopoldo, I-48011 Alfonsine (Ravenna) (IT)
(74) Mandataire: Lanzoni, Luciano

(56) Documents cités:
- EP-A- 0 516 595
- DE-A- 2 507 023
- US-A- 3 849 052
- US-A- 4 266 926
- US-A- 4 353 860
- US-A- 4 545 951

## Description

La présente invention concerne une machine pour façonner en forme de verre les extrémités de tubes modelés thermiquement, destinés en particulier à la réalisation de conduites d'adduction et/ou d'écoulement de fluides.

Les machines susdites, autrement connues sous le nom de machines à donner une forme de verre, comprennent une tête opératrice équipée d'au moins un four pour le chauffage du tube et d'un dispositif d'usinage associés à un banc muni de moyens adéquats d'actionnement sur lequel les tubes à travailler évoluent en un cycle continu.

Le tube, au cours du processus d'usinage, est retenu dans la position de travail par des étaux de blocage qui ont des mâchoires mobiles le long d'un plan vertical.

La technologie actuelle de construction des machines à donner une forme de verre prévoit en substance deux types d'étaux Un premier type decrites dans le document US-A-4.545.951 dans lequel les mâchoires peuvent glisser le long de colonnes de guidage et un deuxième type, réalisé par le même demandeur, dépourvu de colonnes de guidage. Dans ce dernier cas, les mâchoires sont mobiles indépendamment l'une de l'autre, et la condition d'alignementt réciproque est assurée par la structure de la machine qui supporte ces mâchoires.

Dans tous les types de machines à donner une forme de verre les différents éléments de tube, constitués par des morceaux rectilignes, se suivent dans le travail, après avoir été introduits sur le banc de la machine le long d'une direction qui coïncide avec l'axe de symétrie du tube.

Une fois qu'ils sont parvenus sur le banc, ils se transfèrent transversalement à leur direction d'arrivée, d'un mouvement discontinu, un pas après l'autre, en se maintenant parallèlement à eux-mêmes. Au cours des arrêts entre un pas et l'autre les tubes subissent les différentes phases du travail qui consistent essentiellement à réchauffer dans le four l'extrémité à façonner, celle-ci est ensuite prise sur l'étau et elle est enfin usinée. Tant la phase de chauffage que celle d'usinage sont effectuées au moyen de l'association du four et du dispositif d'usinage avec le tube effectuée par des chariots qui, adéquatement actionnés, approchent et éloignent, par rapport au tube, le four et le dispositif d'usinage suivant les différentes phases opérationnelles.

Un premier inconvénient des machines à donner une forme de verre qui possèdent des étaux équipés de colonnes de guidage des mâchoires (US-A-4.545.951) est représenté par le fait que, durant le cycle opérationnel, le tube qui est travaillé, pour ne pas interférer avec les colonnes, doit effectuer, en accord avec son propre axe de symétrie, deux mouvements supplémentaires perpendiculairement au plan vertical sur lequel se déplacent les mâchoires. Un premier mouvement a pour but de porter les extrémités façonnées au-delà des colonnes de guidage, avant que l'étau ne se bloque, pour pouvoir approcher l'extrémité du tube à travailler au dispositif d'usinage qui est placé, par rapport à l'étau, sur le côté opposé à celui qui est intéressé par le banc. En un deuxième temps, une fois que l'usinage est complété, un mouvement en sens contraire est nécessaire pour reporter le tube dans sa première position sur le banc.

En définitive, toutes les autres conditions étant égales, il résulte que le cycle opérationnel des machines à donner une forme de verre dont les étaux sont équipés de colonnes de guidage est plus long et moins économique si on le compare à celui des machines analogues dépourvues de colonnes.

Malgré tout, ces dernières non plus ne manquent pas d'inconvénients, puisque, par rapport aux premières, elles présentent une complexité mécanique et électronique plus grande, ce qui les rend plus coûteuses.

Cela est dû au fait que les machines à donner une forme de verre ayant des chambres d'usinage à fluide pressurisé opèrent avec une paroi élastique qui exige absolument la présence d'éléments rigides en contreposition de la paroi elle-même durant la phase de pressurisation.

De tels éléments, dans les machines à donner une forme de verre qui comprennent des colonnes, peuvent être facilement positionnés sur les mâchoires elles-mêmes. Dans les machines à donner une forme de verre avec les étaux dépourvus de colonnes au contraire, il faut prévoir un chariot supplémentaire pour soutenir ces éléments, lequel est déplacé en synchronisme avec les autres parties de la machine.

Le but de la présente invention, telle qu'elle est caractérisées dans les revendications, est par conséquent d'éliminer les inconvénients que nous venons de mentionner.

Cette invention résoud le problème de fournir une machine pour façonner en forme de verre des extrémités de tubes modelés thermiquement qui comprend:
- un étau pour le blocage des tubes qui a des mâchoires mobiles le long d'un plan vertical, dans lequel l'introduction et le déchargement des tubes s' effectuent tangentiellement audit plan;
- un dispositif d'usinage qui comprend un mandrin pouvant s'associer à une extrémité du tube modelé thermiquement.

Le mandrin est contenu dans la chambre d'usinage à fluide pressurisé qui a une paroi élastique munie d'un trou à travers lequel l'extrémité du tube accède à la chambre d'usinage dans des conditions d'étanchéité à la pression.

La machine comprend en outre des éléments rigides de contreposition portés directement par les mâchoires de l'étau pour contrecarrer la paroi élastique durant la pressurisation de la chambre d'usinage.

Un des avantages obtenus grâce à une machine réalisée suivant la présente invention consiste essentiellement dans le fait qu'elle permet d'obtenir des cycles de travail sensiblement plus rapides et sans mouvements inutiles.

Les machines suivant cette invention présentent en outre une plus petite quantité de parties en jeu, ce qui diminue la complexité de leur construction en permettant de faire des économies sur le prix d'achat et sur les coûts de gestion tout en offant une plus grande fiabilité opérationnelle.

Grâce à une structuration particulière des mâchoires de l'étau avec le banc de soutien des tubes on obtient en outre que le support des tubes soit toujours sur deux points d'appui. Cela permet de travailler des tubes dont la longueur est bien inférieure à celle des tubes qui peuvent être travaillés sur les machines comprenant des colonnes de guidage où le morceau, soutenu par à-coups, ne peut descendre au-dessous d'une certaine longueur.

D'autres avantages et d'autres caractéristiques de cette invention seront mieux mis en évidence dans la description détaillée qui suit, et qui est faite en référence aux dessins ci-joints, qui représentent un exemple de réalisation de l'invention choisi uniquement à titre d'exemple non limitatif.

La figure 1 illustre une vue perspective d'ensemble d'une machine d'usinage réalisée suivant l'invention.

La figure 2 illustre un détail, représenté en une vue perspective latérale, à une échelle agrandie, de la machine de la figure 1.

La figure 3 illustre une vue perspective et partielle de la machine de la fig. 1 prise du côté de la chambre d'usinage du tube.

La figure 4 illustre une vue perspective latérale partielle, avec quelques parties retirées, de certains éléments de la fig. 3.

La figure 5 illustre une vue perspective partielle, à une échelle agrandie, de certains détails de la fig. 2 vue du banc de déplacement des tubes qui sont travaillés.

La figure 6 illustre, à une échelle agrandie, une section d'ensemble du dispositif d'usinage.

La figure 7 illustre une vue perspective d'un détail du dispositif d'usinage.

La figure 8 illustre, sous forme schématique, la disposition d'ensemble des parties principales de la machine avec la mise en évidence des lignes de flux des tubes durant un cycle quelconque de travail.

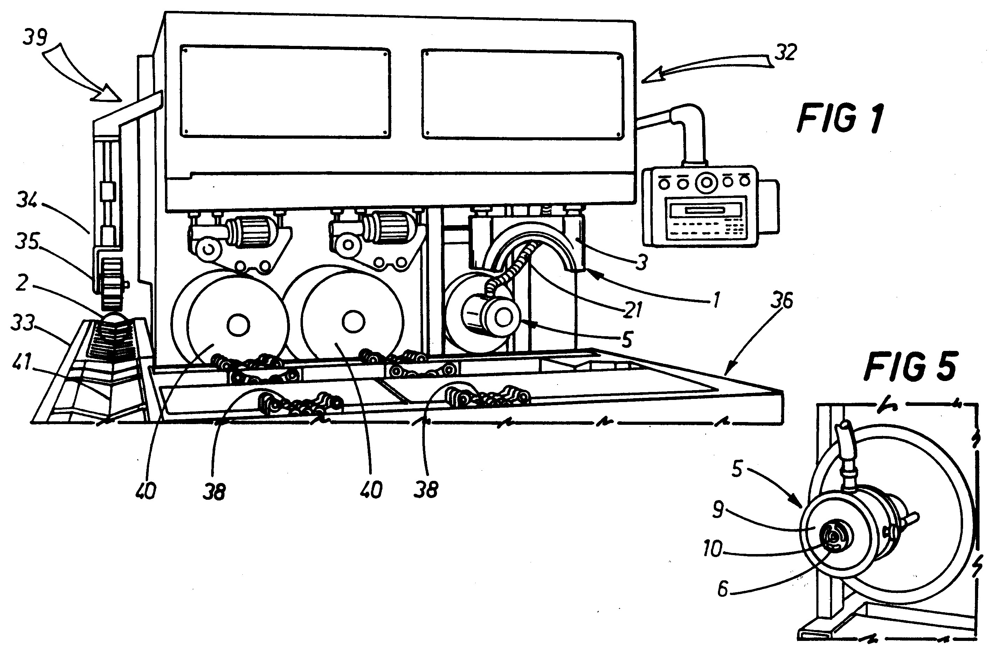

En référence à la figure 1 ci-jointe on observe que l'invention consiste en une machine indiquée dans son ensemble par le (32) qui sert à façonner en forme de verre des extrémités (7) de tubes (2) modelés thermiquement.

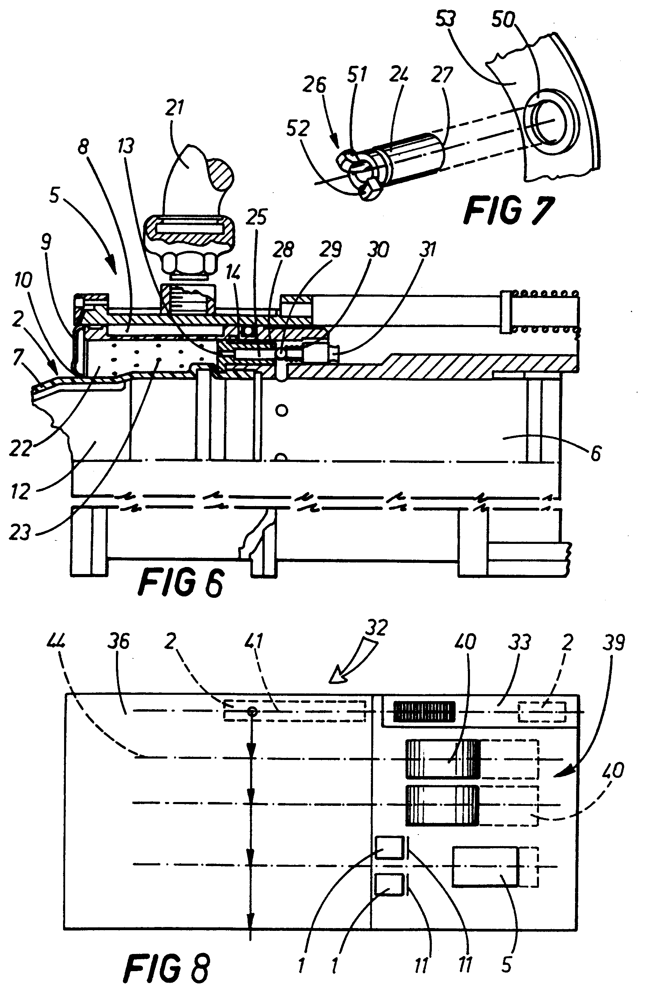

Cette machine (32) comprend en substance (voir aussi la fig. 8) un canal (33) horizontal d'arrivée des tubes (2) à travailler, une table (36) pour le transport des tubes (2) au cours des phases opérationnelles de la machine (32), et une tête (39) opératrice à côté de la table (36) et du canal (33) d'arrivée des tubes (2).

Au-dessus du canal (33) la machine (32) prévoit un petit transporteur (34) à chenille (35) motorisé, soutenu par la structure de la machine (32) et mobile verticalement de façon à s'engager sur les tubes (2) qui se trouvent dans le canal (33) en produisant leur avancement suivant une direction qui coïncide en substance avec leur axe (41) de symétrie.

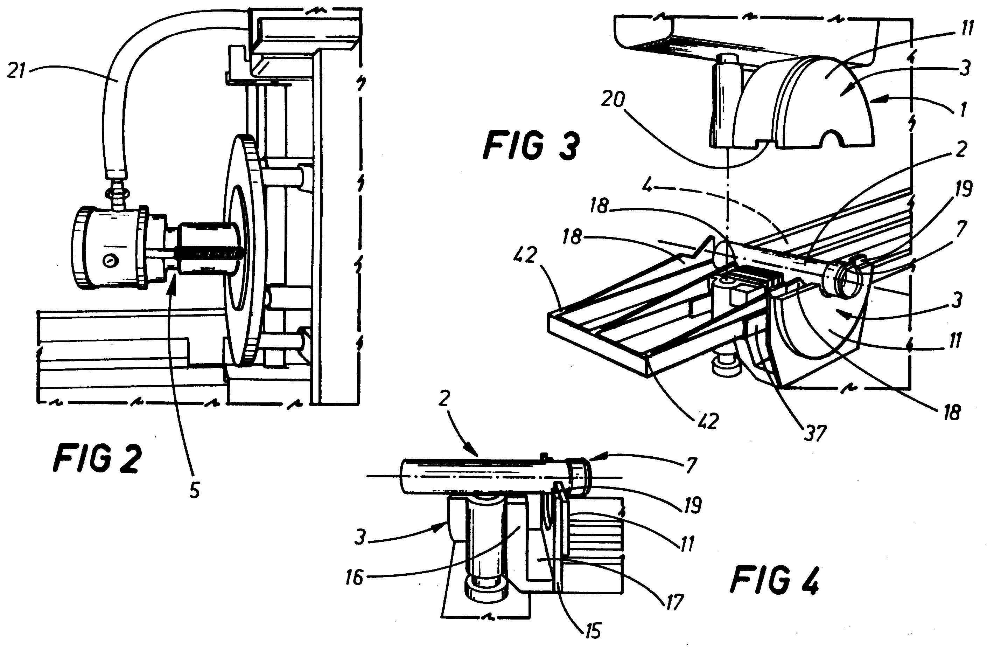

La table (36) est équipée de moyens (37) de soulèvement vertical et de translation horizontale (Fig. 3) des tubes (2) placés à disparition dans la table (36), lesquels prélèvent les tubes (2) du canal (33) et les transfèrent sur une série de supports (38) disposés sur la table (36).

La tête (39) opératrice comprend deux fours (40) pour le chauffage et le modelage des extrémités (7) du tube (2) à usiner; ce dernier, au cours de cette opération, est disposé en alignement avec les fours (40) sur les supports (38) de la table (36) et il est mis on rotation, par rapport à son propre axe (41) de symétrie, par des dispositifs d'entraînement (43) motorisés qui sont soutenus par la tête (39) de la machine (32).

La tête (39) opératrice comprend en outre (Fig. 3):
- un étau (1) pour le blocage des tubes (2) ayant des mâchoires (3) mobiles le long d'un plan (4) vertical, dans lequel l'introduction et le déchargement des tubes (2) qui proviennent de la table (36) s'effectuent tangentiellement au plan (4) vertical d'évolution des mâchoires (3);
- un dispositif (5) d'usinage (Fig. 5 et 6) qui comprend un mandrin (6) d'usinage, muni d'une cavité (12) intérieure de réfrigération, qui peut s'associer à une extrémité (7) du tube (2) modelé thermiquement dans les fours (40), et qui est contenu dans une chambre (8) d'usinage à fluide pressurisé; cette dernière a une paroi (9) élastique munie d'un trou (10) à travers lequel l'extrémité (7) du tube (2) accède à la chambre (8) d'usinage en condition d'étanchéité à la pression.

La machine (32) pour l'usinage comprend en outre des éléments (11) rigides de contreposition portés directement par les mâchoires (3) de l'étau (1), pouvant s'associer au dispositif (5) d'usinage pour contrecarrer la paroi (9) élastique durant la pressurisation de la chambre (8) d' usinage.

Plus particulièrement (Fig. 3) l'élément rigide (11) de contreposition associé à la mâchoire (3) inférieure de l'étau (1) est porté par une paroi (15) soutenue par à-coups par un corps (16) de la mâchoire (3).

Entre la paroi (15) et le corps (16) de la mâchoire (3) est prévue une cavité (17) intermédiaire dans laquelle s'insèrent les éléments (42) de structure de la table (36) qui portent des supports (18) pour le tube (2) sur lesquels ce dernier est disposé en appui, bilatéralement à la mâchoire (3) de l'étau (1).

La paroi (15) prévoit des extrémités (19) façonnées, qui peuvent s'embrayer, durant la fermeture de l'étau (1) dans des sièges correspondants (20) complémentaires aménagées sur la mâchoire (3) opposé de l'étau (1) lui-même.

Grâce aux fig. 5 et 6 on observe que le dispositif (5) d'usinage comprend un unique tube (21) pour l'adduction du fluide servant à la pressurisation de la chambre (8) d'usinage et à la réfrigération du mandrin (6), ainsi qu'une conduite (13) d'intercommunication entre la chambre (8) d'usinage et la cavité (12) de réfrigération du mandrin (6).

La conduite (13) d'intercommunication présente un corps (24) tubulaire (Fig. 7) ayant une cavité (25) qui passe d'une première extrémité (26) associée à la chambre (8) d'usinage à une deuxième extrémité (27) associée à la cavité (12) de réfrigération du mandrin (6) et elle est associée opérationnellement avec des moyens sensibles à la pression (14) du fluide contenu dans la chambre (8) d'usinage.

Le corps (24) tubulaire est inséré dans un siège (50) du mandrin (6) et il fait saillie avec une tête (51) pourvue d'ailettes (52) à partir d'une rainure (53) périphérique du mandrin (6).

Les moyens sensibles à la pression (14) comprennent de préférence, en correspondance de ladite deuxième extrémité (27), une soupape (28) à obturateur (29) contrecarré par un ressort (30) de réaction dont l'étalonnage peut être réglé par un élément (31) de réglage associé au mandrin (6).

La soupape (28) est étalonnée de façon à intercepter la conduite (13) à partir d'une valeur minimum de pression jusqu'à une valeur maximum de seuil établie à l'avance. Une fois qu''est atteinte la valeur de pression d'étalonnage de la soupape (28) l'obturateur (29) s'ouvre sous l'excès de pression du fluide alimenté par le tube (21), pendant qu'une partie du fluide contenu dans la chambre (8) d'usinage se déverse hors de la chambre (8) et, en traversant la conduite (13), parvient dans la cavité (12) du mandrin (6) en le réfrigérant.

En observant la fig. 6, on remarque en outre que la chambre (8) d'usinage prévoit une paroi (22) pourvue d'une pluralité de trous (23), qui se trouve à l'intérieur de la chambre (8) d'usinage elle-même et qui est disposée périphériquement par rapport au mandrin (6). La paroi (22), heurtée par le fluide amené au dispositid (5) d'usinage par le tube (21) subdivise le flux entier du fluide acheminé par le tube (21) en une pluralité de flux élémentaires qui évitent que ne s'instaurent des surpressions dynamiques localisées sur l'extrémité (7) du tube (2) en assurant ainsi à ce dernier un façonnage parfait sur le mandrin (6).

En définitive, le dispositif (5) d'usinage décrit ci-dessus se caractérise par une plus grande simplicité de construction et par un volume de contenance plus réduit qui non seulement rend plus rapides les phases de pressurisation et de déchargement, mais encore, permet de réduire ultérieurement les temps du cycle, d'économiser sur la consommation de l'air, et de limiter l'intensité de la poussée qui est supportée par les éléments (11) rigides de contreposition qui sont portés par les mâchoires (3) de l'étau (1).

Pour mieux illustrer la machine (32) à usiner réalisée suivant cette invention nous allons procéder à la description du fonctionnement d'un cycle quelconque d'usinage.

En référence au schéma de la figure 8 on observe qu'un tube quelconque (2) est apporté le long du canal (33) d'arrivée, le long d'une direction qui coïncide avec son propre axe (41) jusqu'à ce qu'il soit placé sur la table (36). Le tube (2) est d'abors soulevé de la table (36) par des moyens (37) de levage vertical et ensuite il est transféré horizontalement et parallèlement à lui-même en alignement avec un premier four (40). Le four (40) avance en s'approchant du tube (2) et pendant que ce dernier est mis rotation sur les supports (38) il effectue le chauffage de l'extrémité (7) à modeler. Une phase analogue est effectuée dans le four (40) adjacent au premier.

Une fois qu'est terminée la phase de modelage dans les fours (40) le tube (2) parvient en alignement avec l'étau (1) et le dispositif (5) d'usinage qui se trouve derrière.

Aprés le serrage des mâchoires (3) de l'étau (1) le dispositif (5) d'usinage avance vers le tube (2) jusqu'à porter sa propre paroi (9) élastique contre les éléments rigides (11) de contreposition de l'étau (1).

Une fois qu'est atteinte cette condition, le fluide de prsesurisation, habituellement constitué par de l'air comprimé, est envoyé à la chambre (8) d'usinage. Au fur et à mesure que la pression de la chmbre (8) d'usinage s'élève, l'extrémité (7) modelée du tube (2) se serre sur le mandrin (6) en se façonnant complémentairement à celui-ci

Lorsque la valeur d'étalonnage de la soupape (28) est atteinte, cette dernière s'ouvre, et alors que la pression de la chambre (8) d'usinage reste constante, un flux d'air sujet à la différence entre la pression d'adduction du tube (21) et la pression d'étalonnage de la soupape (28) atteint la cavité (12) intérieure du mandrin (6) en le réfrigérant.

Une fois que la solidification de l'extrémité (7) du tube (2) s'est effectuée, le dispositif (5) d'usinage se retire et le tube (2), après l'ouverture des mâchoires (3), est soulevé des supports (18) de la table (36) et il est déchargé de la machine (32) sur le côté opposé à celui par où il est entré.

L'invention ainsi conçue est susceptible de nombreuses modifications et variantes qui rentrent toutes dans le cadre du concept inventif selon les revendications. En outre, tous les détails peuvent être remplacés par des éléments techniquement équivalents.

Dans la pratique il est évidemment possible d'effectuer des modifications et/ou des améliorations qui rentrent toutes dans le cadre des revendications suivantes.

## Revendications

1. Machine pour façonner en forme de verre les extrémités de tubes modelés thermiquement, comprenant au moins un étau (1) pour le blocage des tubes (2) ayant des mâchoires (3) mobiles le long d'un plan (4) vertical; un dispositif (5) d'usinage comprenant un mandrin (6) d'usinage muni d'une cavité (12) intérieure de réfrigération et associable à une extrémité (7) du tube (2) modelé thermiquement, ledit mandrin (6) étant contenu dans une chambre (8) d'usinage à fluide pressurisé, ladite chambre (8) d'usinage ayant une paroi (9) élastique munie d'un trou (10) au travers duquel l'extrémité (7) du tube (2) accède à ladite chambre (8) d'usinage en condition d'étancheité à la pression; des éléments (11) rigides de contreposition pour contrecarrer ladite paroi (9) élastique durant la pressurisation de la chambre (8) d'usinage, caractérisée par le fait que ledit dispositif (5) d'usinage comprend au moins une conduite (13) d'intercommunication entre ladite chambre (8) d'usinage et la cavité (12) de réfrigération du mandrin (6); et par le fait qu'elle comprend des moyens sensibles à la pression (14) du fluide contenu dans la chambre (8) d'usinage, lesquels interceptent la conduite (13) jusqu'a une valeur maximum de seuil de la pression, au-delà de laquelle une partie du fluide contenu dans ladite chambre (8) d'usinage, en traversant la conduite (13), parvient dans la cavité (12) du mandrin (6) en le réfrigérant.

2. Machine, selon la revendication 1, caractérisée par le fait que ladite conduite (13) d'intercommunication présente un corps (24) tubulaire ayant une cavité (25) passant d'une première extrémité (26) associée à la chambre (8) d'usinage à une deuxième extrémité (27) associée à la cavité (12) de réfrigération du mandrin (6), lesdits moyens sensibles à la pression (14) comprenant une soupape (28) localisée en correspondance de la deuxième extrémité (27) et pourvue d'un obturateur (29) contrecarré par un ressort (30) de réaction.

3. Machine, selon la revendication 1, caractérisée par le fait que ledit dispositif (5) d'usinage comprend un tube unique (21) pour l'adduction à la chambre (8) d'usinage du fluide de pressurisation et pour la réfrigération du mandrin (6).

4. Machine, selon la revendication 1, caractérisée par le fait que lesdits éléments rigides (11) sont portés directement par les mâchoires (3) dudit étau (1).

5. Machine, selon la revendication 4, caractérisée par le fait que ledit élément (11) rigide de contreposition associé à la mâchoire (3) intérieure de l'étau (1) est porté par une paroi (15) soutenue par à-coups par un corps (16) de la mâchoire (3), et par le fait qu'une cavité (17) de logement pour un support (18) du tube (2) est interposée entre ladite paroi (15) et ledit corps (16).

6. Machine, selon la revendication 5, caractérisée par le fait que ladite paroi (15) prévoit des extrémités (19) façonnées, lesquelles sont embrayables dans des sièges correspondants (20) complémentaires aménagés sur l'autre mâchoire (3) de l'étau (1).

7. Machine, selon la revendication 1, caractérisée par le fait qu'elle comprend une paroi (22) munie d'une pluralité de trous (23), laquelle est contenue à l'intérieur de la chambre (8) d'usinage, est disposée périphériquement par rapport audit mandrin (6) et subdivise en une pluralité de flux élémentaires le flux entier du fluide acheminé par le tube (21) vers le dispositif (5) d'usinage.

8. Machine, selon la revendication 1, caractérisée par le fait que lesdits moyens sensibles à la pression (14) comprennent un élément (31) de réglage de la soupape (28) associée audit mandrin (6).

9. Machine, selon la revendication 1, caractérisée par le fait que l'introduction et le déchargement des tubes (2) s'effectuent tangentiellement audit plan (4) vertical.

## Claims

1. A machine for making sockets at the end of thermally plasticized pipes comprising: a chuck (1) for clamping pipes (2), said chuck having jaws (3) movable along a vertical plane (4); a forming device (5) comprising a forming mandrel (6) provided with a cooling inner recess (12) and connectable to the end (7) of a thermally plasticized pipe (2), said mandrel (6) being enclosed in a pressurized fluid forming chamber (8), said forming chamber (8) having a resilient wall (9) provided with a hole (10), the pipe end (7) entering through said hole (10) with a pressure sealing relationship; stiff elements (11) for counteracting said resilient wall (9) during pressurization of the forming chamber (8), characterized in that said forming device (5) comprises at least one inteconnecting conduit (13) between said chamber (8) and said cooling mandrel recess (12); and in that it comprises means (14) responsive to pressure of the fluid contained in forming chamber (8), said means closing said conduit (13) to a maximum pressure threshold value, above said value part of fluid contained in said forming chamber (8) enters mandrel recess (12) flowing through said conduit (13), for cooling said mandrel (6).

2. Machine according to claim 1, characterized in that said interconnecting conduit (13) has a tubular body (24) provided with a cavity (25) connecting a first end (26) associated to the forming chamber (8), to a second end (27) associated to the cooling mandrel recess (12), said pressure responsive means (14) comprising a valve (28) located at the second end (27) and provided with a valve element (29) urged by a bias spring (30).

3. Machine according to claim 1, characterized in that said forming device (5) comprises a single hose (21) for conveying the pressurized fluid to forming chamber (8) and for cooling mandrel (6).

4. Machine according to claim 1, characterized in that said stiff elements (11) are directly supported by said chuck jaws (3).

5. Machine according to claim 4, characterized in that said stiff counteracting element (11) connected to the chuck lower jaw (3) is supported by a wall (15) cantileverly carried by a jaw body (16), and in that a housing (17) receiving a pipe rest (18) is located between said wall (15) and said body (16).

6. Machine according to claim 5, characterized in that said wall (15) has shaped ends (19) insertable into related complementary seats (20) provided in the other chuck jaw (3).

7. Machine according to claim 1, characterized in that it comprises a wall (22) provided with a plurality of holes (23), contained in the forming chamber (8) and peripherally located to said mandrel (6), said wall separating the whole fluid flow conveyed through hose (21) to the forming device (5) into a plurality of elementary flows.

8. Machine according to claim 1, characterized in that said pressure responsive means (14) comprise an element (31) for adjusting said valve (28), connected to the mandrel (6).

9. Machine according to claim 1, characterized in that supplying and discharge of pipes (2) are tangential to said vertical plane (4).

## Patentansprüche

1. Maschine zum Formen von Muffen an den Enden von thermisch erweichten Rohren, enthaltend wenigstens eine Spannvorrichtung (1) zum Halten der Rohre (2), welche entlang einer vertikalen Ebene (4) bewegliche Klemmbacken (3) aufweist; eine Bearbeitungsvorrichtung (5), enthaltend eine Arbeitsspindel (6), versehen mit einem internen Hohlraum (12) zum Kühlen, die einem Ende (7) des thermisch erweichten Rohres (2) zuzuordnen ist, wobei die genannte Spindel (6) in einer Formkammer (8) mit unter Druck stehender Flüssigkeit enthalten ist, und wobei die genannte Formkammer (8) eine elastische Wand (9) enthält, versehen mit einer Öffnung (10), durch welche das Ende (7) des Rohres (2) in die genannte Formkammer (8) in einen Zustand der Abdichtung gegen den Druck eingeführt werden kann; starre Anschlagelemente (11), um der genannten elastischen Wand (9) während der Druckerzeugung in der Formkammer (8) entgegenzuwirken, **dadurch gekennzeichnet**, dass die genannte Bearbeitungsvorrichtung (5) wenigstens eine Leitung (13) zur Verbindung zwischen der genannten Formkammer (8) und dem Hohlraum (12) zum Kühlen der Spindel (6) enthält; und **dadurch**, dass sie auf den Druck der in der Formkammer (8) enthaltenen Flüssigkeit empfindlich reagierende Mittel (14) enthält, welche die Leitung (13) bis zu einem maximalen Schwellenwert des Druckes absperrt, über den hinaus ein Teil der in der genannten Formkammer (8) enthaltenen Flüssigkeit durch die Leitung (13) abfliesst und in den Hohlraum (12) der Spindel (6) gelangt und diese kühlt.

2. Maschine nach Patentanspruch 1, **dadurch gekennzeichnet**, dass die genannte Leittung (13) zur Verbindung einen rohrförmigen Körper (24) aufweist, welcher einen durchgehenden Hohlraum (25) enthält, der von einem ersten, der Formkammer (8) zugeordneten Ende (26) bis zu einem zweiten, dem Hohlraum (12) zuin Kühlen der Spindel (6) zugeordneten Ende (27) geht, wobei die auf Druck empfindlich reagierenden Mittel (14) entsprechend an dein zweiten Ende (27) ein Ventil (28) enthalten, versehen mit einem Verschluss (29), dem eine Druckfeder (30) entgegenwirkt.

3. Maschine nach Patentanspruch 1, **dadurch gekennzeichnet**, dass die genannte Bearbeitungsvorrichtung (5) eine einzige Leitung (21) zuin Zuführen von Druckflüssigkeit an die Formkammer (8) und zum Kühlen der Spindel (6) enthält.

4. Maschine nach Patentanspruch 1, **dadurch gekennzeichnet**, dass die genannten starren Elemente (11) direkt von den Klemmbacken (3) der genannten Spannvorrichtung (1) getragen werden.

5. Maschine nach Patentanspruch 4, **dadurch gekennzeichnet**, dass das der unteren Klemmbacke (3) der Spannvorrichtung (1) zugeordnete genannte starre Anschlagelement (11) von einer Wand (15) getragen wird, letztere überhängend gehalten von einem Körper (16) der Klemmbacke (3), und **dadurch**, dass sich ein Hohlraum (17) zur Aufnahme eines Supportes (18) für das Rohr (2) zwischen der genannten Wand (15) und dein genannten Körper (16) befindet.

6. Maschine nach Patentanspruch 5, **dadurch gekennzeichnet**, dass die genannte Wand (15) profilierte Enden (19) vorsieht, welche in entsprechende ergänzende Sitze (20) einsetzbar sind, eingearbeitet in die andere Klemmbacke (3) der Spannvorrichtung (1).

7. Maschine nach Patentanspruch 1, **dadurch gekennzeichnet**, dass sie eine Wand (22) enthält, versehen mit einer Anzahl von Bohrungen (23), welche im Inneren der Formkammer (8) enthalten und umlaufend zu der genannten Spindel (6) angeordnet ist, und die den gesamten, von der Leitung (21) in Richtung der Bearbeitungsvorrichtung (5) geförderten Fluss in eine Anzahl von elementaren Flüssen unterteilt.

8. Maschine nach Patentanspruch 1, **dadurch gekennzeichnet**, dass die genannten, auf Druck empfindlich reagierenden Mittel (14) ein Regelelement (31) für das der genannten Spindel (6) zugeordnete Ventil (28) enthalten.

9. Maschine nach Patentanspruch 1, **dadurch gekennzeichnet**, dass das Einlegen und Abladen der Rohre (2) tangential zu der genannten vertikalen Ebene (4) erfolgt.
